# FASCICULE DE BREVET EUROPEEN

(11) **EP 3 283 699 B1**
(45) Date de publication et mention de la délivrance du brevet: **11.03.2020**
(21) Numéro de dépôt: 16733628.8
(22) Date de dépôt: 11.04.2016
(51) Int. Cl.: E03B 7/07, E03C 1/10

(54) **DISPOSITIF ANTI-RETOUR POUR UNE CANALISATION DE TRANSPORT D'UN FLUIDE**
RÜCKSCHLAGVORRICHTUNG FÜR EIN ROHR ZUM FÜHREN EINES FLUIDS
NONRETURN DEVICE FOR A PIPE FOR CARRYING A FLUID

(30) Priorité: 13.04.2015 FR 1553176
(43) Date de publication de la demande: 21.02.2018
(73) Titulaire: Guerry Innovation, 49460 Cantenay-Epinard (FR)
(72) Inventeur: GUERRY, Stéphane, 49460 Cantenay-Epinard (FR)
(74) Mandataire: Jacobacci Coralis Harle
(86) Numéro de dépôt international: PCT/FR2016/050828
(87) Numéro de publication internationale: WO 2016/166458

(56) Documents cités:
- EP-A2- 0 351 806
- DE-C1- 19 840 315
- US-A- 2 773 251

## Description

### DOMAINE TECHNIQUE AUQUEL SE RAPPORTE L'INVENTION

La présente invention concerne un dispositif anti-retour pour une canalisation de transport d'un fluide (gaz, liquide ou encore gaz/liquide chargé de solide) selon le préambule de la revendication 1, dans le but de prévenir toute remontée de ce fluide dans ladite canalisation.

### ARRIERE-PLAN TECHNOLOGIQUE

Il existe de nombreux systèmes ou dispositifs de sécurité, adaptés pour empêcher de telles remontées de fluide dans une canalisation d'alimentation.

Les systèmes les plus courants consistent en des clapets qui peuvent être de différents types : à boule, à battant, à disque ..., mais qui sont très généralement peu fiables.

Des systèmes plus complexes et plus fiables appelés généralement « disconnecteurs » sont aussi utilisés par exemple pour empêcher le retour d'une eau polluée (provenant d'un réseau de chauffage central, d'une tour aéro-réfrigérante ...) vers un circuit d'eau potable destiné à la consommation.

Dans ce cadre, on connait notamment des systèmes à clapet anti-retour adaptés pour maintenir une différence de pression entre leur entrée et leur sortie, associés à une vanne d'arrêt du type à deux positions active/inactive, munie d'un élément sélecteur mobile associé à des moyens d'actionnement.

Mais ces systèmes génèrent des pertes de charges conséquentes et/ou nécessitent des différences de pression importantes pour fonctionner, car c'est l'énergie, liée à la différence de pression aux bornes du clapet, ou d'un piston, qui agit directement sur la vanne.

De plus, par principe, ces disconnecteurs nécessitent pour fonctionner une mise à l'évent du fluide du circuit aval en cas d'inversion du gradient de pression.

On connait du document FR-2 469 630 un disconnecteur pour canalisation d'eau potable fonctionnant au moyen d'un piston creux coulissant axialement dans un corps creux entre deux butées extrêmes, dans un sens sous l'action de la pression amont, et dans l'autre sous celle d'un ressort antagoniste, s'ajoutant à la pression aval.

Mais un inconvénient d'un tel système est qu'il nécessite des pertes de charges importantes pour fonctionner.
De plus, la circulation de fluide dans le sens normal est à nouveau possible dès que le gradient de pression minimum est rétabli. Le système nécessite aussi une mise à l'évent du circuit aval car sinon, il remplit la même fonction qu'un clapet anti-retour. D'autre part, par nature, il n'est fonctionnel que pour des vannes à piston.

Un autre dispositif anti-retour connu est décrit dans le document WO-00/04310 concernant les gaz transportés par pipelines.
Le dispositif correspondant se présente sous la forme d'une vanne commandée par un élément sensible à la pression dans lequel la pression s'élève en fonction de la température (pour détecter un incendie périphérique). Ici, le dispositif est sensible à la pression dans l'élément sensible, et non pas à une différence de pression aux bornes d'un clapet anti-retour.

Encore un autre système anti-retour connu est décrit dans le document US-2 773 251.
Ce dispositif anti-retour pour canalisation comporte un clapet anti-retour adapté pour maintenir une différence de pression de fluide ΔP entre son entrée et sa sortie, et une vanne d'arrêt dont le moyen d'actionnement consiste en un électro-aimant fonctionnant en fermeture à partir d'un courant qui circule lorsque le circuit électrique est fermé.
Il comporte également un piston déclencheur comprenant un corps délimitant un volume interne séparé en deux chambres par un élément mobile qui est équipé d'une tige d'activation, ces deux chambres étant en communication fluidique avec ladite canalisation, respectivement en amont et en aval dudit clapet anti-retour.
La tige d'activation se déplace sous l'action de l'élément mobile en fonction des pressions dans les deux chambres et elle ferme le circuit électrique, pour activer la vanne d'arrêt, lorsque la différence de pression de fluide ΔP dépasse une valeur seuil.
L'élément mobile est soumis à l'action d'un système ressort qui détermine sa position pour régler le seuil de fermeture du circuit électrique.

Mais un tel système anti-retour présente l'inconvénient de nécessiter un apport d'énergie électrique pour fonctionner.

### OBJET DE L'INVENTION

La présente invention a pour but de proposer un dispositif anti-retour pour une canalisation de transport d'un fluide, qui est fiable, très sûr, ne générant qu'une faible perte de pression. Ce dispositif n'a pas besoin d'une différence de pression importante pour être activé ; en outre, il ne nécessite pas d'apport extérieur d'une source d'énergie électrique, pneumatique ou hydraulique.

Pour cela, le dispositif anti-retour conforme à l'invention, pour une canalisation de transport d'un fluide, comporte, positionnés sur ladite canalisation :
- une vanne d'arrêt du type à deux positions, l'une active d'obturation de ladite canalisation, et l'autre inactive, laquelle vanne est munie d'un élément sélecteur mobile associé à des moyens d'actionnement,
- un clapet anti-retour comportant une entrée et une sortie, tenant compte de la direction normale de déplacement du fluide, adapté pour maintenir une différence de pression de fluide ΔP entre ladite entrée et ladite sortie, et
- un piston déclencheur comprenant un corps délimitant un volume interne séparé en deux chambres par un élément mobile qui est équipé d'une tige d'activation,
une première desdites chambres étant en communication fluidique avec ladite canalisation en aval dudit clapet anti-retour, et
une seconde desdites chambres étant en communication fluidique avec ladite canalisation en amont dudit clapet anti-retour ;
en outre, lesdits moyens d'actionnement sont munis d'un dispositif d'accumulation/libération d'énergie potentielle (par exemple ressort, aimant, contrepoids ...), adapté à accumuler de l'énergie potentielle lors du passage de ladite vanne d'arrêt de sa position active à sa position inactive, et adapté à libérer ladite énergie potentielle lors du passage de ladite vanne d'arrêt de sa position inactive vers sa position active ;
et ladite tige d'activation dudit piston déclencheur est adaptée pour pouvoir actionner lesdits moyens d'actionnement de l'élément sélecteur de ladite vanne d'arrêt, afin de manœuvrer cette dernière, de sa position inactive vers sa position active, dans le cas où ladite différence de pression ΔP passe sous un seuil prédéterminé, avec libération de l'énergie potentielle accumulée par ledit dispositif d'accumulation/libération d'énergie potentielle.

Un tel dispositif, fonctionnant par libération d'énergie potentielle préalablement accumulée, et donc activé de manière mécanique, ne nécessite pas d'apport d'une source extérieure d'énergie électrique pneumatique ou hydraulique pour être mis en œuvre.

Dans une forme de réalisation préférée, ledit clapet anti-retour est positionné en aval de ladite vanne d'arrêt, ladite seconde chambre du piston déclencheur étant en communication fluidique avec ladite canalisation en aval de ladite vanne d'arrêt.

La tige d'activation du piston déclencheur est avantageusement reliée mécaniquement audit élément mobile dudit piston déclencheur, ou par accouplement magnétique.

Selon une autre particularité, le dispositif anti-retour comporte une vanne d'évacuation du fluide, du type à deux positions, l'une inactive, et l'autre active dans laquelle elle est apte à assurer le transfert du fluide provenant de l'aval de ladite canalisation, dans une canalisation secondaire d'évacuation. Cette vanne d'évacuation est munie d'un élément sélecteur mobile associé à des moyens d'actionnement qui sont adaptés pour être actionnés par ladite tige d'activation dudit piston déclencheur, afin de manœuvrer ladite vanne d'évacuation de sa position inactive vers sa position active, simultanément à la manœuvre en position active de ladite vanne d'arrêt.
Cette vanne d'évacuation peut consister en une vanne dont l'élément sélecteur est de type trois voies, et qui est positionnée sur ladite canalisation de transport de fluide en amont de ladite vanne d'arrêt, l'une desdites voies de ladite vanne d'évacuation étant raccordée à ladite canalisation secondaire.
Dans une variante de réalisation, la vanne d'évacuation consiste en une vanne dont l'élément sélecteur est du type ouvert/fermé et elle est positionnée à l'entrée de ladite canalisation secondaire d'évacuation venant se raccorder sur ladite canalisation de transport du fluide, entre ladite vanne d'arrêt et ledit clapet anti-retour.

Selon encore une autre caractéristique, les moyens d'actionnement de l'élément sélecteur mobile de la vanne d'arrêt, et éventuellement les moyens d'actionnement de l'élément sélecteur mobile de la vanne d'évacuation, comportent un bras de manœuvre associé à une gâchette d'actionnement mobile, laquelle gâchette comporte un siège apte à venir en appui contre une butée escamotable portée par ladite tige d'actionnement dudit piston déclencheur, sous l'effet dudit dispositif d'accumulation/libération d'énergie potentielle ;
cette gâchette d'actionnement est alors adaptée pour occuper deux positions :
- l'une enclenchée dans laquelle ledit siège est en appui contre ladite butée escamotable, ladite vanne d'arrêt, et ladite vanne d'évacuation éventuelle, étant en position inactive, par l'intermédiaire de leur bras de manœuvre respectif, et
- l'autre déclenchée, dans laquelle après escamotage de ladite butée escamotable, ledit siège n'est pas en appui contre ladite butée et dans laquelle ladite vanne d'arrêt, et ladite vanne d'évacuation éventuelle, sont en position active, par l'intermédiaire de leur bras de manœuvre respectif.

Le dispositif anti-retour conforme à l'invention comporte encore des moyens poussoirs pour la manœuvre manuelle - de la gâchette d'actionnement des moyens d'actionnement de ladite vanne d'arrêt, - de la gâchette d'actionnement éventuelle de ladite vanne d'évacuation éventuelle, et - de l'élément mobile du piston déclencheur, depuis leur position déclenchée vers leur position enclenchée.

Selon encore une autre particularité, l'élément mobile du piston déclencheur consiste en une membrane déformable. Dans une variante de réalisation, cet élément mobile du piston déclencheur consiste en un piston déplaçable en translation au sein du corps dudit piston déclencheur.

Les vannes d'arrêt et/ou d'évacuation sont avantageusement du type vannes rotatives ou du type vannes à soupape.

Toujours selon une caractéristique préférentielle de l'invention, l'une au moins desdites première ou seconde chambres du corps du piston déclencheur comporte un moyen de rappel adapté pour régler le seuil de pression de déclenchement dudit piston déclencheur.

### DESCRIPTION DETAILLEE DE L'INVENTION

L'invention sera encore illustrée, sans être aucunement limitée, par la description suivante de plusieurs formes de réalisation possible données uniquement à titre d'exemples et représentées sur les dessins annexés dans lesquels :
- la figure 1 est un schéma fonctionnel d'un dispositif anti-retour conforme à l'invention, en position inactive enclenchée ;
- la figure 2 est un schéma fonctionnel du dispositif anti-retour de la figure 1, représenté ici en position active déclenchée ;
- la figure 3 est un schéma fonctionnel d'une seconde forme de réalisation possible du dispositif anti-retour conforme à l'invention ;
- la figure 4 illustre une troisième forme de réalisation possible du dispositif anti-retour selon l'invention, toujours sous forme de schéma fonctionnel.

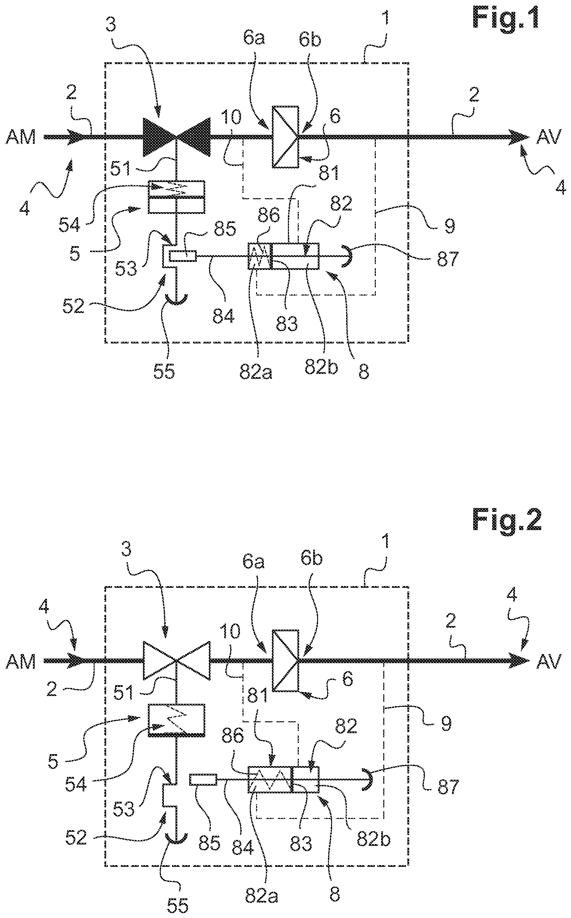

Les figures 1 et 2 illustrent une première forme de réalisation d'un dispositif anti-retour 1 conforme à l'invention, pour une canalisation 2 de transport d'un fluide, dans le but de prévenir toute remontée de ce fluide, de l'aval vers l'amont.

Le fluide en question peut être un liquide ou un gaz (par exemple un liquide ou un gaz tel que de l'eau, de l'azote gaz ou liquide, de l'air comprimé, du gaz naturel, de l'hydrogène, de la boue ...).

Le dispositif anti-retour 1 comporte une vanne d'arrêt 3, positionnée sur la canalisation 2, ici une vanne du type à deux positions :
- une position inactive (figure 1) dans laquelle la vanne 3 laisse passer le fluide dans la canalisation 2, depuis l'amont AM vers l'aval AV, comme indiqué par les flèches d'orientation 4, et
- une position active (figure 2) dans laquelle la vanne 3 obture la canalisation 2, empêchant le passage du fluide.

On peut utiliser tout type de vanne 3 adapté, en particulier une vanne de type rotative ou à soupape, en fonction du fluide concerné et des choix du concepteur.

La vanne d'arrêt 3 est munie d'un élément sélecteur mobile intégré (non représenté), associé à des moyens d'actionnement 5 détaillés plus loin dans la description.

Un clapet anti-retour 6 est également positionné sur la canalisation 2, en aval de la vanne d'arrêt 3.

Ce clapet anti-retour 6 est adapté pour autoriser le déplacement du fluide dans la canalisation 2 uniquement dans le sens amont AM vers l'aval AV.
Il comporte une entrée 6a et une sortie 6b, tenant compte de la direction normale de déplacement du fluide (amont vers aval) ; et il est adapté pour maintenir une différence de pression de fluide ΔP entre ladite entrée 6a et ladite sortie 6b.

Le clapet anti-retour 6 peut être du type à disque, à boule, à battant ou autre.

Le dispositif anti-retour 1 comporte encore un piston déclencheur 8 dont la fonction est de commander le passage de la vanne d'arrêt 3 de sa position inactive à sa position active lorsque la différence de pression de fluide ΔP entre l'entrée 6a et la sortie 6b du clapet anti-retour 6 dépasse un seuil prédéterminé.

Pour cela, le piston déclencheur 8 comporte un corps 81 qui délimite un volume interne 82 séparé en deux chambres 82a et 82b par un élément mobile 83 relié mécaniquement à une tige d'activation 84.

Cet élément mobile 83 peut par exemple se présenter sous la forme d'une membrane déformable ou sous la forme d'un piston déplaçable en translation au sein du corps 81.

Les deux chambres 82a et 82b sont séparées l'une de l'autre de manière étanche par l'élément mobile 83.

La première chambre 82a est en communication fluidique avec la canalisation 2, en aval du clapet anti-retour 6, cela par l'intermédiaire d'un canal 9. De son côté, la seconde chambre 82b est en communication fluidique avec la canalisation 2, en amont du clapet anti-retour 6 et en aval de la vanne d'arrêt 3, cela par l'intermédiaire d'un canal 10.

La tige 84 du piston déclencheur 8 s'étend, à partir de l'élément mobile 83, dans la première chambre 82a du corps 81 ; elle traverse cette première chambre 82a et elle s'étend extérieurement audit corps 81. Son extrémité libre se termine par une butée escamotable 85 dont on comprend que le positionnement est commandé par l'élément mobile 83.

Cette butée escamotable 85 coopère avec les moyens d'actionnement 5 de la vanne 3 pour gérer les positions active et inactive de cette dernière.

Pour cela, les moyens d'actionnement 5 comportent un bras 51 mobile, adapté pour manœuvrer l'élément sélecteur mobile intégré à la vanne 3. Le bras de manœuvre 51 est associé à une gâchette d'actionnement mobile 52 munie d'un siège 53 apte à venir en appui contre ladite butée escamotable 85 du piston déclencheur 8, cela sous l'effet de moyens de rappel 54. Ces moyens de rappel 54 peuvent consister en un ou plusieurs ressorts, une ou plusieurs rondelles élastiques, un ou plusieurs aimants, ou tout autre dispositif apte à stocker une énergie potentielle permettant d'actionner une ou plusieurs vannes.

Le principe de fonctionnement du dispositif anti-retour 1 est le suivant :
En situation normale de transport du fluide dans la canalisation 2 (figure 1) le clapet anti-retour 6 permet de maintenir une différence de pression ΔP entre son entrée 6a et sa sortie 6b, c'est-à-dire entre l'amont AM et l'aval AV.

L'ensemble piston déclencheur 8/moyens d'actionnement 5 est en position enclenchée (ou armée), c'est-à-dire que le siège 53 de la gâchette d'actionnement 52 est en appui sur la butée escamotable 85 sous l'effet des moyens de rappel 54, le bras de manœuvre 51 maintenant l'élément sélecteur de la vanne 3 en position inactive pour autoriser le passage du fluide.

La vanne 3 est donc en position ouverte.

Cette position ouverte est maintenue dès lors que la butée escamotable 85 ne change pas de position et donc dès lors que les pressions sont équilibrées dans les première et deuxième chambres 82a et 82b du piston 8, de part et d'autre de l'élément mobile 83.

En cas de tentative de remontée de fluide dans le réseau, de l'aval AV vers l'amont AM, la différence de pression ΔP évolue entre l'entrée 6a et la sortie 6b du clapet 6, et aussi dans les chambres 82a, 82b du piston déclencheur 8.
Lorsque cette différence de pression ΔP passe en-dessous d'un certain seuil prédéterminé, la butée escamotable 85 a été déplacée par l'élément mobile 83 de façon suffisante pour ne plus servir d'appui au siège 53 de la gâchette d'actionnement 52.

Comme illustré sur la figure 2, la gâchette d'actionnement 52 se déplace alors sous l'effet des moyens de rappel 54 (libérant l'énergie potentielle accumulée), provoquant le déplacement du bras de manœuvre 51, et par voie de conséquence celui de l'élément sélecteur intégré à la vanne d'arrêt 3, pour placer cette dernière en position active d'obturation de la canalisation 2.

La structure des moyens d'actionnement 5 est adaptée en conséquence ; et la fermeture de la vanne d'arrêt 3 permet d'empêcher la tentative de remontée du fluide dans la canalisation 2, en plus de la première barrière constituée par le clapet 6. Le seuil prédéterminé de différence de pression ΔP pour le déclenchement du dispositif est choisi en fonction de la perte de charge admissible dans le réseau et de l'effort de pression à exercer dans le piston déclencheur 8 et sur les moyens d'actionnement 5.

Sur les figures 1 et 2, on remarque la présence d'un moyen de rappel en forme de ressort 86 ménagé au sein du corps de piston 81, ayant pour fonction de régler précisément le seuil de pression de déclenchement du piston déclencheur 8.

Ce ressort 86 est ici prévu dans la chambre 82a du corps de piston 81, mais il pourrait aussi être présent dans la chambre 82b ou encore de part et d'autre de l'élément mobile 83 (dans les chambres 82a et 82b), notamment selon l'orientation du piston déclencheur 8 par rapport à la gravité, selon les pertes liées aux frottements, ou encore selon les efforts à fournir pour manœuvrer la tige d'activation 84.

Par ailleurs, si l'élément mobile 83 consiste en une membrane déformable, cette fonction de réglage de pression de déclenchement peut être assurée également par une membrane adaptée.

Après son déclenchement pour la fermeture de la vanne 3 (et après résolution du problème de remontée de fluide dans le réseau), la gâchette d'actionnement 52 peut être réenclenchée manuellement par des moyens de manœuvre adaptés.

Comme on peut le voir sur les figures 1 et 2 ces moyens de manœuvre consistent avantageusement en :
- un moyen poussoir 55 permettant le déplacement de la gâchette 52 et de son siège 53 à l'encontre de la poussée du ressort de rappel 54, et
- un moyen poussoir 87 permettant le déplacement de la tige 84 du piston déclencheur 8 et de sa butée escamotable 85 pour le repositionnement de cette dernière en appui contre ledit siège de gâchette 53 (à l'encontre de la poussée du ressort de rappel 86).

La manœuvre manuelle des deux moyens poussoirs 55 et 87 permet le maintien du ré-enclenchement de la gâchette d'actionnement 52 uniquement si la différence de pression ΔP autour du clapet anti-retour 6 s'établit correctement.

Le ré-enclenchement correspondant assure la remise en position inactive de la vanne d'arrêt 3, en attente sécuritaire d'un nouveau problème potentiel.

On notera que la liaison entre l'élément mobile 83 du piston déclencheur 8 et sa tige de manœuvre 84 (avec la butée escamotable 85) peut être réalisée par tout moyen mécanique approprié ou encore par accouplement magnétique.

Dans une variante de réalisation, la vanne d'arrêt 3 peut être positionnée en aval du clapet anti-retour 6.

Le dispositif anti-retour 1 conforme à l'invention est entièrement mécanique et il ne nécessite aucun apport d'énergie pour exécuter son action de fermeture du circuit (à l'exception de l'énergie nécessaire au ré-enclenchement).

Le piston déclencheur 8 fonctionne avec le fluide transporté par la canalisation 2.

L'évènement déclencheur correspond à un passage en-dessous d'une certaine valeur de pression, et le dispositif déclenche la fermeture de la vanne 3 lors de chaque sollicitation ; le retour à une situation normale de distribution du fluide nécessite une intervention manuelle.

Un tel système est plus fiable qu'un simple clapet anti-retour du fait qu'il est constitué d'une double barrière (un clapet et une vanne).

En outre, comme précisé ci-dessus, lorsque le dispositif a été sollicité (déclenchement) il est nécessaire de mettre en œuvre une action manuelle de ré-enclenchement pour rétablir la fonction de distribution du fluide, ce qui implique une intervention volontaire et correspond à une sécurité supplémentaire.

De plus, le déclenchement de la vanne d'arrêt 3 et l'étanchéité du clapet anti-retour 6 peuvent être facilement testés sans démonter l'équipement, en isolant le dispositif (arrêt du débit) puis en équilibrant les pressions en amont et en aval du clapet anti-retour 6 ou du piston déclencheur 8 à l'aide d'une vanne complémentaire et d'un manomètre différentiel, permettant de relier les deux côtés du piston déclencheur 8.

Contrairement aux systèmes existants de type disconnecteurs, un tel dispositif ne nécessite pas de différence de pression importante pour actionner la vanne d'arrêt, et il peut donc être utilisé avec des fluides à basse pression.

Il génère de plus une faible perte de pression (uniquement liée à la perte de charge et la pression d'ouverture du clapet anti-retour), ceci grâce à la séparation de l'étage de commande (liée à la différence de pression) et de l'étage de puissance (fermeture de la vanne d'arrêt avec un moyen de rappel 54 lors du mouvement de la gâchette d'actionnement 52).

Encore une autre différence avec un système de type disconnecteur réside dans le fait que la partie fluide process n'est pas mise obligatoirement en contact avec l'atmosphère extérieure du dispositif, ce qui peut se révéler très important pour les réseaux stériles par exemple, ou pour les fluides réagissant à l'air ou à l'atmosphère extérieure à la canalisation.

Le dispositif anti-retour 1 conforme à l'invention n'est pas sensible aux pressions interne et externe, mais uniquement à la différence de pression dans le circuit interne du fluide.

La précision du déclenchement est liée au réglage du piston de déclenchement 8 (la pression de déclenchement doit être inférieure à la pression de tarage du clapet anti-retour 6, mais peut aussi être nulle ou négative, la seule contrainte étant que la pression de déclenchement soit inférieure à la pression de tarage du clapet anti-retour).

Pour limiter les pertes de charge sur le réseau fluide, le clapet anti-retour 6 peut être taré à 0 bar, auquel cas une différence de pression négative sera nécessaire pour actionner le piston de déclenchement 8.

On notera que pour les utilisations avec des fluides gazeux, un tarage du clapet anti-retour 6 avec une pression légèrement supérieure à 0 bar (quelques millibars) sera préféré ; des tarages à 0 bar seront plutôt utilisables avec des fluides liquides (car la hauteur manométrique sur le piston de déclenchement 8 peut venir agir, ce qui n'est pas le cas avec les fluides gazeux, ceci en fonction de l'orientation des chambres du piston 8 par rapport à la gravité terrestre).

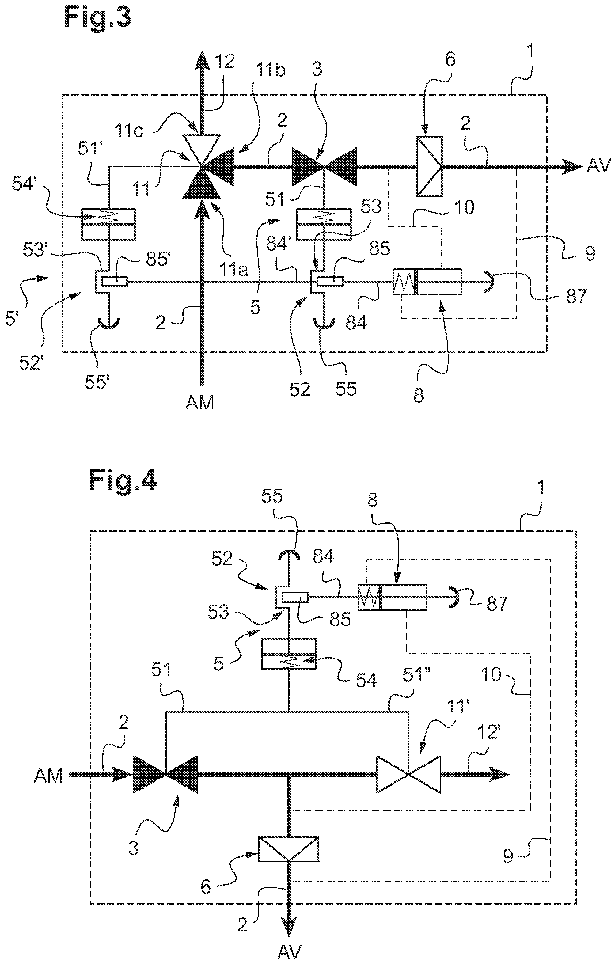

Les figures 3 et 4 illustrent schématiquement deux variantes de réalisation du dispositif anti-retour selon l'invention, comportant une sécurité supplémentaire, en forme de vanne d'évacuation adaptée, en cas de détection d'une tentative de remontée du fluide de l'aval AV vers l'amont AM, pour assurer le transfert du fluide susceptible de provenir de l'aval du réseau, dans une canalisation secondaire d'évacuation (c'est-à-dire pour une mise à l'évent de ce fluide aval).

Sur les figures 3 et 4, les parties ou éléments fonctionnels identiques ou similaires au premier mode de réalisation illustré sur les figures 1 et 2 conservent les mêmes repères par mesure de simplification.

D'une manière générale, dans les deux variantes de réalisation des figures 3 et 4 on retrouve, positionnés sur la canalisation 2 :
- la vanne d'arrêt 3 avec ses moyens d'actionnement 5,
- le clapet anti-retour 6 (positionné en aval de la vanne d'arrêt 3), et
- le piston déclencheur 8,
qui coopèrent ensemble de la manière détaillée ci-dessus en relation avec les figures 1 et 2.

Dans le mode de réalisation illustré sur la figure 3, une vanne d'évacuation du type trois voies 11 est placée sur la canalisation 2 en amont de la vanne d'arrêt 3.

Cette vanne trois voies 11 comporte :
- une première voie 11a raccordée à l'amont AM de la canalisation 2,
- une seconde voie 11b raccordée à l'aval de la canalisation 2 (c'est-à-dire côté vanne d'arrêt 3), et
- une troisième voie 11c raccordée à une canalisation secondaire d'évacuation 12.

Cette vanne trois voies 11 est munie d'un élément sélecteur mobile interne (non représenté) associé à des moyens d'actionnement 5' ; elle est du type à deux positions à savoir :
- une position dite inactive (tel qu'illustré sur la figure 3) dans laquelle les voies 11a et 11b sont raccordées pour autoriser le passage du fluide dans la canalisation 2, de l'amont AM vers l'aval AV (distribution normale du fluide dans la canalisation 2), et
- une position dite active, dans laquelle les voies 11b et 11c sont raccordées, pour autoriser le transfert d'un fluide provenant de l'aval (c'est-à-dire de la vanne d'arrêt 3, vers la canalisation secondaire d'évacuation 12 (pour une mise à l'évent de ce fluide). Dans cette position active, les voies 11a et 11b ne sont plus en communication.

Les moyens d'actionnement 5' sont identiques ou similaires aux moyens d'actionnement 5 de la vanne d'arrêt 3 ; ils comprennent un bras 51' mobile adapté pour manœuvrer l'élément sélecteur mobile de la vanne 11, lequel bras de manœuvre 51' est associé à une gâchette d'actionnement mobile 52' munie d'un siège 53'. Sous l'effet d'un ressort de rappel 54', cette gâchette 52' est apte à venir en appui contre une butée escamotable 85' ménagée à l'extrémité d'une tige 84' en liaison mécanique avec la tige 84 du piston déclencheur 8.

En l'occurrence, la tige 84' des moyens d'actionnement 5' de la vanne d'évacuation 11 prolonge ici la tige 84 du piston déclencheur 8 associée à la vanne d'arrêt 3 et au clapet anti-retour 6.

Le piston déclencheur 8 actionne donc ici simultanément :
- la gâchette d'actionnement 52 des moyens d'actionnement 5 de la vanne d'arrêt 3, d'une manière identique ou similaire au mode de réalisation des figures 1 et 2, et
- la gâchette d'actionnement 52' des moyens d'actionnement 5' de la vanne d'évacuation 11.

En situation normale de transport du fluide dans la canalisation 2, de l'amont AM vers l'aval AV, la vanne d'évacuation 11 et la vanne d'arrêt 3 sont en position inactive.

En cas de détection d'une tentative de remontée de fluide dans le réseau, de l'aval AV vers l'amont AM, le piston déclencheur 8 actionne :
- la vanne d'arrêt 3 en position active de fermeture, via les moyens d'actionnement 5 associés à la butée escamotable 85, de la manière détaillée en relation avec les figures 1 et 2, et
- la vanne d'évacuation 11 en position active, d'une part, pour la mise en communication de ses voies 11b et 11c afin d'autoriser le passage du fluide provenant de l'aval, dans la canalisation d'évacuation 12, et d'autre part, pour empêcher la communication de ses voies 11a et 11b, afin de bloquer le fluide provenant de l'amont. Cette mise en position active de la vanne d'évacuation 11 s'effectue via les moyens d'actionnement 5' associés à la butée escamotable 85'.

Dans une telle configuration, la vanne d'arrêt 3 sert de première barrière d'arrêt et la vanne d'évacuation 11 permet de couper l'alimentation du fluide et de mettre le côté utilisation en communication avec la canalisation d'évacuation 12, pour réceptionner le fluide, en cas de fuite de la vanne d'arrêt 3 (par exemple liée à un retour de pression trop important, ne pouvant être stoppé par ladite vanne d'arrêt 3).

Les moyens d'actionnement 5' comportent un moyen poussoir 55' pour leur remise manuelle en position enclenchée, simultanément à la remise manuelle en position enclenchée des moyens d'actionnement 5 (par les moyens poussoirs précités 55 et 87).

Le dispositif est alors replacé en position sécuritaire, en attente d'une nouvelle situation anormale éventuelle.

Dans le mode de réalisation illustré sur la figure 4, une vanne d'évacuation 11' est placée à l'entrée d'une canalisation secondaire d'évacuation 12' qui vient se raccorder sur la canalisation principale de transport 2, entre la vanne d'arrêt 3 et le clapet anti-retour 6.

Cette vanne d'évacuation 11' est munie d'un élément sélecteur mobile interne (non représenté), qui est actionné par les moyens d'actionnement 5 du piston déclencheur 8, en particulier par un bras de manœuvre 51" prolongeant le bras de manœuvre 51 de la vanne d'arrêt 3, ou en prise mécanique avec ce bras 51.

La vanne 11' est du type à deux positions ouverte/fermée, à savoir :
- une position inactive (fermée) empêchant le passage du fluide vers l'aval de la canalisation d'évacuation 12', et
- une position active (ouverte) autorisant le passage du fluide vers l'aval de la canalisation d'évacuation 12'.

Ici, le piston déclencheur 8 actionne simultanément les bras de manœuvre 51 et 51", respectivement de la vanne d'arrêt 3 et de la vanne d'évacuation 11', par l'intermédiaire de la même gâchette de déclenchement 52.

En situation normale de transport du fluide dans la canalisation 2, de l'amont AM vers l'aval AV, les deux vannes 3 et 11' sont en position inactive (vanne d'arrêt 3 ouverte et vanne d'évacuation 11' fermée).

En cas de détection d'une tentative de remontée de fluide dans le réseau, de l'aval AV vers l'amont AM, le piston déclencheur 8 actionne la vanne d'arrêt 3 en position active de fermeture, via le bras de manœuvre 51 des moyens d'actionnement 5, et la vanne d'évacuation 11' en position active d'ouverture, via le bras de manœuvre 51" des moyens d'actionnement 5.

Cette configuration présente un intérêt lorsqu'on ne souhaite pas ou lorsqu'on ne peut pas utiliser de vanne trois voies, mais que l'on veut effectuer également une mise à l'évent.

Dans les structures des variantes de réalisation illustrées sur les figures 3 et 4, les vannes d'évacuation 11 et 11' peuvent être des vannes de type rotatif (à boule par exemple) ou de type à soupape (membrane ou papillon par exemple). Les différentes vannes peuvent être de tout type, excepté la vanne 11 qui doit être une vanne de technologie multivoies (boisseau, sphérique, conique ...) ; le type de vanne est choisi notamment en fonction des caractéristiques du fluide à transporter.

D'une manière générale, les différents éléments constitutifs du dispositif conforme à l'invention, et la structure de ce dispositif, en particulier avec ou sans vanne d'évacuation, seront choisis en fonction des situations en présence et des produits (liquide ou gaz) à véhiculer.

Les bras pour la commande des vannes d'arrêt et éventuellement d'évacuation, sont structurés pour actionner de manière appropriée l'élément sélecteur mobile de ces vannes, à partir des mouvements de la gâchette d'actionnement associée.

## Revendications

1. Dispositif anti-retour (1) pour une canalisation (2) de transport d'un fluide, lequel dispositif anti-retour (1) comporte, destinés à être positionnés sur ladite canalisation (2) :
- une vanne d'arrêt (3) du type à deux positions, l'une active d'obturation de ladite canalisation (2), et l'autre inactive, munie d'un élément sélecteur mobile associé à des moyens d'actionnement (5),
- un clapet anti-retour (6) comportant une entrée (6a) et une sortie (6b), tenant compte de la direction normale de déplacement du fluide, adapté pour maintenir une différence de pression de fluide ΔP entre ladite entrée (6a) et ladite sortie (6b), et
- un piston déclencheur (8) comprenant un corps (81) délimitant un volume interne (82) séparé en deux chambres (82a, 82b) par un élément mobile (83) qui est équipé d'une tige d'activation (84),
une première desdites chambres (82a) destinée à être en communication fluidique avec ladite canalisation (2) en aval dudit clapet anti-retour (6), et une seconde desdites chambres (82b) destinée à être en communication fluidique avec ladite canalisation (2) en amont dudit clapet anti-retour (6), **caractérisé en ce que** lesdits moyens d'actionnement (5) de ladite vanne d'arrêt (3) sont munis d'un dispositif (54, 54') d'accumulation et libération d'énergie potentielle, adapté à accumuler de l'énergie potentielle lors du passage de ladite vanne d'arrêt (3) de sa position active à sa position inactive, et adapté à libérer ladite énergie potentielle lors du passage de ladite vanne d'arrêt (3) de sa position inactive vers sa position active, ladite tige d'activation (84) dudit piston déclencheur (8) étant adaptée pour pouvoir actionner lesdits moyens d'actionnement (5) de l'élément sélecteur de ladite vanne d'arrêt (3), afin de manœuvrer cette dernière de sa position inactive vers sa position active dans le cas où ladite différence de pression ΔP passe sous un seuil prédéterminé, avec libération de l'énergie potentielle accumulée par ledit dispositif (54, 54') d'accumulation/libération d'énergie potentielle.

2. Dispositif anti-retour (1) selon la revendication 1, **caractérisé en ce que** ledit clapet anti-retour (6) est positionné en aval de ladite vanne d'arrêt (3), ladite seconde chambre (82b) dudit piston déclencheur (8) étant en communication fluidique avec ladite canalisation (2) en aval de ladite vanne d'arrêt (3).

3. Dispositif anti-retour (1) selon l'une quelconque des revendications 1 ou 2, **caractérisé en ce que** ladite tige d'activation (84) est reliée mécaniquement audit élément mobile (83) dudit piston déclencheur (8), ou par accouplement magnétique.

4. Dispositif anti-retour (1) selon l'une quelconque des revendications 1 à 3, **caractérisé en ce qu'**il comporte une vanne d'évacuation (11, 11') du fluide du type à deux positions, l'une inactive, et l'autre active dans laquelle elle est apte dans un mode d'utilisation à assurer le transfert du fluide provenant de l'aval de ladite canalisation (2), dans une canalisation secondaire d'évacuation (12, 12'), laquelle vanne d'évacuation (11, 11') est munie d'un élément sélecteur mobile associé à des moyens d'actionnement (5, 5') qui sont adaptés pour être actionnés par ladite tige d'activation (84) dudit piston déclencheur (8), afin de manœuvrer ladite vanne d'évacuation (11, 11') de sa position inactive vers sa position active, simultanément à la manœuvre en position active de ladite vanne d'arrêt (3).

5. Dispositif anti-retour (1) selon la revendication 4, **caractérisé en ce que** ladite vanne d'évacuation (11) consiste en une vanne dont l'élément sélecteur est de type trois voies (11a, 11b, 11c), laquelle vanne d'évacuation (11) est destinée à être positionnée sur ladite canalisation (2) de transport de fluide en amont de ladite vanne d'arrêt (3), et l'une desdites voies (11c) de ladite vanne d'évacuation (11) est destinée à être raccordée à ladite canalisation secondaire d'évacuation (12).

6. Dispositif anti-retour (1) selon la revendication 4, **caractérisé en ce que** ladite vanne d'évacuation (11') consiste en une vanne dont l'élément sélecteur est du type ouvert/fermé, laquelle vanne d'évacuation (11') est destinée à être positionnée à l'entrée de ladite canalisation secondaire d'évacuation (12') venant se raccorder sur ladite canalisation (2) de transport du fluide, entre ladite vanne d'arrêt (3) et ledit clapet anti-retour (6).

7. Dispositif anti-retour (1) selon l'une quelconque des revendications 1 à 6, **caractérisé en ce que** les moyens d'actionnement (5) de l'élément sélecteur mobile de ladite vanne d'arrêt (3), et éventuellement les moyens d'actionnement (5', 5) de l'élément sélecteur mobile de ladite vanne d'évacuation (11, 11'), comportent un bras de manœuvre (51, 51', 51") associé à une gâchette d'actionnement mobile (52, 52'), laquelle gâchette (52, 52') comporte un siège (53, 53') apte à venir en appui contre une butée escamotable (85, 85') portée par ladite tige d'activation (84, 84') dudit piston déclencheur (8), sous l'effet dudit dispositif (54, 54') d'accumulation/libération d'énergie potentielle,
laquelle gâchette d'actionnement (52, 52') est adaptée pour occuper deux positions :
- l'une enclenchée, dans laquelle ledit siège (53, 53') est en appui contre ladite butée escamotable (85, 85'), ladite vanne d'arrêt (3), et éventuellement ladite vanne d'évacuation (11, 11'), étant en position inactive par l'intermédiaire de leur bras de manœuvre respectif (51, 51', 51"), et
- l'autre déclenchée, dans laquelle, après escamotage de ladite butée escamotable (85, 85'), ledit siège (53, 53') n'est pas en appui contre ladite butée (85, 85'), et dans laquelle ladite vanne d'arrêt (3) et éventuellement ladite vanne d'évacuation (11, 11'), sont en position active, par l'intermédiaire de leur bras de manœuvre respectif (51, 51', 51").

8. Dispositif anti-retour (1) selon la revendication 7, **caractérisé en ce qu'**il comporte des moyens poussoirs (55, 55', 87) pour la manœuvre manuelle - de la gâchette d'actionnement (52) des moyens d'actionnement (5) de ladite vanne d'arrêt (3), - de la gâchette d'actionnement (52') éventuelle des moyens d'actionnement (5') de ladite vanne d'évacuation (11), et - de l'élément mobile (83) du piston déclencheur (8), depuis leur position déclenchée vers leur position enclenchée.

9. Dispositif anti-retour (1) selon l'une quelconque des revendications 1 à 8, **caractérisé en ce que** l'élément mobile (83) du piston déclencheur (8) consiste en une membrane déformable.

10. Dispositif anti-retour (1) selon l'une quelconque des revendications 1 à 8, **caractérisé en ce que** l'élément mobile (83) du piston déclencheur (8) consiste en un piston déplaçable en translation au sein du corps (81) du piston déclencheur (8).

11. Dispositif anti-retour (1) selon l'une quelconque des revendications 1 à 10, **caractérisé en ce que** ladite vanne d'arrêt (3) et/ou ladite vanne d'évacuation (11, 11') est/sont du type vanne rotative.

12. Dispositif anti-retour (1) selon l'une quelconque des revendications 1 à 10, **caractérisé en ce que** ladite vanne d'arrêt (3) et/ou ladite vanne d'évacuation (11, 11') sont du type vanne à soupape.

13. Dispositif anti-retour (1) selon l'une quelconque des revendications 1 à 12, **caractérisé en ce que** l'une au moins desdites première ou seconde chambre (82a, 82b) du corps (81) dudit piston déclencheur (8) comporte un moyen de rappel (86) adapté pour régler le seuil de pression de déclenchement dudit piston déclencheur (8).

## Patentansprüche

1. Rückschlagvorrichtung (1) für ein Rohr (2) zum Führen eines Fluids, wobei die Rückschlagvorrichtung (1) folgende Elemente aufweist, die dazu bestimmt sind, an dem Rohr (2) angeordnet au sein:
- einen Absperrschieber (3) vom Typ mit zwei Stellungen, einer aktiven zum Absperren des Rohrs (2) und einer inaktiven, der mit einem beweglichen, Betätigungsmitteln (5) zugeordneten Auswahlelement versehen ist,
- ein Rückschlagventil (6) mit einem Eingang (6a) und einem Ausgang (6b), bezogen auf die normale Durchflußrichtung des Fluids, das dazu ausgelegt ist, einen Fluiddruckunterschied ΔP zwischen dem Eingang (6a) und dem Ausgang (6b) aufrechtzuerhalten, und
- einen Auslösekolben (8) mit einem Korpus (81), der ein inneres Volumen (82) begrenzt, das durch ein bewegliches Element (83), das mit einer Betätigungsstange (84) versehen ist, in zwei Kammern (82a, 82b) aufgeteilt ist,
eine erste (82a) der besagten Kammern, die dazu bestimmt ist, stromabwärts vom Rückschlagventil (6) in fluider Verbindung mit dem Rohr (2) zu sein, und
eine zweite (82b) der besagten Kammern, die dazu bestimmt ist, stromaufwärts vom Rückschlagventil (6) in fluider Verbindung mit dem Rohr (2) zu sein,
**dadurch gekennzeichnet, daß** die Betätigungsmittel (5) des Absperrschiebers (3) mit einer Vorrichtung (54, 54') zum Sammeln und Freisetzen potentieller Energie versehen sind,
die dazu ausgelegt ist, beim Übergang des Absperrschiebers (3) von dessen aktiver Stellung in dessen inaktive Stellung potentielle Energie anzusammeln, und die dazu ausgelegt ist, die potentielle Energie beim Übergang des Absperrschiebers (3) von dessen inaktiver Stellung in die aktive Stellung freizusetzen,
wobei die Betätigungsstange (84) des Auslösekolbens (8) dazu ausgelegt ist, die Betätigungsmittel (5) des Auswahlelements des Absperrschiebers (3) betätigen zu können, um letzteren unter Freisetzung der von der Vorrichtung (54, 54') zum Sammeln und Freisetzen potentieller Energie angesammelten potentiellen Energie aus dessen inaktiver Stellung in dessen aktive Stellung zu bringen, wenn der Druckunterschied ΔP unter einen vorbestimmten Schwellwert gerät.

2. Rückschlagvorrichtung (1) gemäß Anspruch 1, **dadurch gekennzeichnet, daß** das Rückschlagventil (6) stromabwärts vom Absperrschieber (3) angeordnet ist, wobei die zweite Kammer (82b) des Auslösekolbens (8) mit dem Rohr (2) stromabwärts vom Absperrschieber (3) mit dem Rohr (2) in fluider Verbindung steht.

3. Rückschlagvorrichtung (1) gemäß einem der Ansprüche 1 oder 2, **dadurch gekennzeichnet, daß** die Betätigungsstange (84) mechanisch oder durch magnetische Ankopplung mit dem beweglichen Element (83) des Auslösekolbens (8) verbunden ist.

4. Rückschlagvorrichtung (1) gemäß einem der Ansprüche 1 bis 3, **dadurch gekennzeichnet, daß** sie einen Fluidablaßschieber (11, 11') vom Typ mit zwei Stellungen, einer inaktiven und einer aktiven, in der er in einer Verwendungsart in der Lage ist, die Weiterleitung des von stromabwärts des Rohrs (2) kommenden Fluids in ein sekundäres Ablaßrohr (12, 12') sicherzustellen, aufweist,
wobei der Ablaßschieber (11, 11') mit einem beweglichen Auswahlelement versehen ist, das Betätigungsmitteln (5, 5') zugeordnet ist, die dazu ausgelegt sind, durch die Betätigungsstange (84) des Auslösekolbens (8) betätigt zu werden, um den Ablaßschieber (11, 11'), zeitgleich mit dem In-die-aktive-Stellung-Bringen des Absperrschiebers (3), aus dessen inaktiver Stellung in die aktive Stellung zu bringen.

5. Rückschlagvorrichtung (1) gemäß Anspruch 4, **dadurch gekennzeichnet, daß** der Ablaßschieber (11) aus einem Schieber besteht, dessen Auswahlelement vom Drei-Wege-Typ (11a, 11b, 11c) ist, wobei der Ablaßschieber (11) dazu bestimmt ist, an dem Rohr (2) zum Führen eines Fluids stromaufwärts vom Absperrschieber (3) angeordnet zu werden, und einer (11c) der Wege des Ablaßschiebers (11) dazu bestimmt ist, mit dem sekundären Ablaßrohr (12) verbunden zu werden.

6. Rückschlagvorrichtung (1) gemäß Anspruch 4, **dadurch gekennzeichnet, daß** der Ablaßschieber (11') aus einem Schieber besteht, dessen Auswahlelement vom Typ geöffnet/geschlossen ist, wobei der Ablaßschieber (11') dazu bestimmt ist, am Eingang des am Rohr (2) zum Führen eines Fluids angeschlossenen sekundären Ablaßrohrs (12), zwischen dem Absperrschieber (3) und dem Rückschlagventil (6), angeordnet zu werden.

7. Rückschlagvorrichtung (1) gemäß einem der Ansprüche 1 bis 6, **dadurch gekennzeichnet, daß** die Betätigungsmittel (5) des beweglichen Auswahlelements des Absperrschiebers (3) und eventuell die Betätigungsmittel (5, 5') des beweglichen Auswahlelements des Ablaßschiebers (11, 11') einen mit einem beweglichen Abzugshebel (52, 52') verbundenen Betätigungsarm (51, 51', 51") aufweisen, wobei der Abzugshebel (52, 52') einen Sitz (53, 53') aufweist, der geeignet ist, unter Einwirkung der Vorrichtung (54, 54') zum Sammeln und Freisetzen potentieller Energie gegen einen von der Betätigungsstange (84, 84') des Auslösekolbens (8) getragenen einziehbaren Anschlag (85, 85') in Andruck zu kommen, wobei der Abzugshebel (52, 52') dazu ausgelegt ist, zwei Stellungen einzunehmen:
- eine Einraststellung, in der der Sitz (53, 53') gegen den einziehbaren Anschlag (85, 85') drückt, wobei sich der Absperrschieber (3) und eventuell der Ablaßschieber (11, 11') über deren jeweiligen Betätigungsarm (51, 51', 51") in inaktiver Stellung befinden, und
- eine Auslösungsstellung, in der der Sitz (53, 53') nach Einziehen des einziehbaren Anschlags (85, 85') nicht am Anschlag (85, 85') anliegt und in der sich der Absperrschieber (3) und eventuell der Ablaßschieber (11, 11') über deren jeweiligen Betätigungsarm (51, 51', 51") in aktiver Stellung befinden.

8. Rückschlagvorrichtung (1) gemäß Anspruch 7, **dadurch gekennzeichnet, daß** sie Mittel zum Drücken (55, 55', 87) zur manuellen Betätigung - des Abzugshebels (52) der Betätigungsmittel (5) des Absperrschiebers (3), - des eventuellen Abzugshebels (52') der Betätigungsmittel (5') des Ablaßschiebers (11) und - des beweglichen Elements (83) des Auslösekolbens (8) von deren Auslösestellung zu deren Einraststellung aufweist.

9. Rückschlagvorrichtung (1) gemäß einem der Ansprüche 1 bis 8, **dadurch gekennzeichnet, daß** das bewegliche Element (83) des Auslösekolbens (8) aus einer verformbaren Membrane besteht.

10. Rückschlagvorrichtung (1) gemäß einem der Ansprüche 1 bis 8, **dadurch gekennzeichnet, daß** das bewegliche Element (83) des Auslösekolbens (8) aus einem translatorisch bewegbaren Kolben innerhalb des Korpus (81) des Auslösekolbens (8) besteht.

11. Rückschlagvorrichtung (1) gemäß einem der Ansprüche 1 bis 10, **dadurch gekennzeichnet, daß** der Absperrschieber (3) und/oder der Ablaßschieber (11, 11') vom Typ eines drehenden Schiebers ist/sind.

12. Rückschlagvorrichtung (1) gemäß einem der Ansprüche 1 bis 10, **dadurch gekennzeichnet, daß** der Absperrschieber (3) und/oder der Ablaßschieber (11, 11') vom Typ eines Schiebers mit Ventilen ist/sind.

13. Rückschlagvorrichtung (1) gemäß einem der Ansprüche 1 bis 12, **dadurch gekennzeichnet, daß** wenigstens eine der ersten oder zweiten Kammer (82a, 82b) des Korpus (81) des Auslösekolbens (8) ein Rückstellmittel (86) aufweist, das dazu ausgelegt ist, die Schwelle des Auslösedrucks des Auslösekolbens (8) zu regeln.

## Claims

1. A nonreturn device (1) for a fluid-carrying pipe (2), said nonreturn device (1) includes, intended to be positioned on said pipe (2):
- a shut-off gate (3) of the two-position type, an active one for shutting said pipe (2), and an inactive one, provided with a mobile selector element associated with actuation means (5),
- a nonreturn valve (6) including an inlet (6a) and an outlet (6b), taking into account the normal direction of displacement of the fluid, adapted to maintain a fluid pressure difference ΔP between said inlet (6a) and said outlet (6b), and
- a triggering piston (8) comprising a body (81) delimiting an internal volume (82) separated into two chambers (82a, 82b) by a mobile element (83) that is equipped with an activation rod (84),
a first one of said chambers (82a) being intended to be in fluidic communication with said pipe (2) downstream from said nonreturn valve (6), and
a second one of said chambers (82b) being intended to be in fluidic communication with said pipe (2) upstream from said nonreturn valve (6),
**characterized in that** said actuation means (5) of said shut-off gate (3) are provided with a device for accumulating and releasing potential energy (54, 54'), adapted to accumulate potential energy when said shut-off gate (3) passes from its active position to its inactive position, and adapted to release said potential energy when said shut-off gate (3) passes from its inactive position to its active position,
said activation rod (84) of said triggering piston (8) being adapted to be able to actuate said actuation means (5) of the selector element of said shut-off gate (3), in order to operate the latter from its inactive position to its active position, in the case where said pressure difference ΔP passes under a predetermined threshold, with release of the potential energy accumulated by said device for accumulating / releasing potential energy (54, 54).

2. The nonreturn device (1) according to claim 1, **characterized in that** said nonreturn valve (6) is positioned downstream from said shut-off gate (3), said second chamber (82b) of said triggering piston (8) being in fluidic communication with said pipe (2) downstream from said shut-off gate (3).

3. The nonreturn device (1) according to any one of claims 1 or 2, **characterized in that** said activation rod (84) is mechanically linked to said mobile element (83) of said triggering piston (8), or by a magnetic coupling.

4. The nonreturn device (1) according to any one of claims 1 to 3, **characterized in that** it includes a fluid evacuation gate (11, 11') of the two-position type, an inactive one, and an active one in which it is adapted in a mode of use to ensure the transfer of the fluid coming from the downstream of said pipe (2), to a secondary evacuation pipe (12, 12'),
wherein said evacuation gate (11, 11') is provided with a mobile selector element associated with actuation means (5, 5') that are adapted to be actuated by said activation rod (84) of said triggering piston (8), in order to operate said evacuation gate (11, 11') from its inactive position to its active position, simultaneously to the operation of said shut-off gate (3) to the active position.

5. The nonreturn device (1) according to claim 4, **characterized in that** said evacuation gate (11) consists in a gate whose selector element is of the three-way type (11a, 11b, 11c), wherein said evacuation gate (11) is intended to be positioned on said fluid-carrying pipe (2) upstream from said shut-off gate (3), and one of said ways (11c) of said evacuation gate being intended to be connected to said secondary evacuation pipe (12).

6. The nonreturn device (1) according to claim 4, **characterized in that** said evacuation gate (11') consists in a gate whose selector element is of the open / closed type, wherein said evacuation gate (11') is intended to be positioned at the inlet of said secondary evacuation pipe (12') that is connected to said fluid-carrying pipe (2), between said shut-off gate (3) and said nonreturn valve (6).

7. The nonreturn device (1) according to any one of claims 1 to 6, **characterized in that** the actuation means (5) of the mobile selector element of said shut-off gate (3), and potentially the actuation means (5', 5) of the mobile selector element of the evacuation gate (11, 11'), include an operating arm (51, 51', 51") associated with a mobile actuation trigger (52, 52'), wherein said trigger (52, 52') includes a seat (53, 53') adapted to bear against a retractable stop (85, 85') carried by said actuation rod (84, 84') of said triggering piston (8), under the effect of said device for accumulating/releasing potential energy (54, 54'),
wherein said actuation trigger (52, 52') is then adapted to occupy two positions:
- a locked one, in which said seat (53, 53') bears against said retractable stop (85, 85'), said shut-off gate (3), and potentially said evacuation gate (11, 11'), being in inactive position through their respective operating arm (51, 51', 51"), and
- an unlocked one, in which, after retraction of said retractable stop (85, 85'), said seat (53, 53') does not bear against said stop (85, 85'), and in which said shut-off gate (3), and potentially said evacuation gate (11, 11'), are in active position, through their respective operating arm (51, 51', 51").

8. The nonreturn device (1) according to claim 7, **characterized in that** it includes pusher means (55, 55', 87) for the manual operation - of the actuation trigger (52) of the actuation means (5) of said shut-off gate (3), - of the potential actuation trigger (52') of the actuation means (5') of said potential evacuation gate (11), and - of the mobile element (83) of the triggering piston (8), from their unlocked position to their locked position.

9. The nonreturn device (1) according to any one of claims 1 to 8, **characterized in that** the mobile element (83) of the triggering piston (8) consists in a deformable membrane.

10. The nonreturn device (1) according to any one of claims 1 to 8, **characterized in that** the mobile element (83) of the triggering piston (8) consists in a piston that is mobile in translation within the body (81) of said triggering piston (8).

11. The nonreturn device (1) according to any one of claims 1 to 10, **characterized in that** said shut-off gate (3) and/or said evacuation gate (11, 11') is/are of the rotary slide valve type.

12. The nonreturn device (1) according to any one of claims 1 to 10, **characterized in that** said shut-off gate (3) and/or said evacuation gate (11, 11') are of the pressure-retaining valve type.

13. The nonreturn device (1) according to any one of claims 1 to 12, **characterized in that** one at least of said first and second chambers (82a, 82b) of the body (81) of the triggering piston (8) includes a return means (86) adapted to adjust the triggering pressure threshold of the triggering piston (8).
